# EUROPÄISCHE PATENTSCHRIFT

(11) **EP 3 619 244 B1**
(45) Veröffentlichungstag und Bekanntmachung des Hinweises auf die Patenterteilung: **04.08.2021**
(21) Anmeldenummer: 18718475.9
(22) Anmeldetag: 25.04.2018
(51) Int. Cl.: C08F 2/08, C08L 33/02

(54) **VERFAHREN ZUR DISKONTINUIERLICHEN HERSTELLUNG VON SUPERABSORBERPARTIKELN DURCH POLYMERISATION EINER IN EINEM HYDROPHOBEN LÖSUNGSMITTEL DISPERGIERTEN WÄSSRIGEN MONOMERLÖSUNG**
METHOD FOR THE DISCONTINUOUS PRODUCTION OF SUPERABSORBER PARTICLES BY POLYMERIZING AN AQUEOUS MONOMER SOLUTION DISPERSED IN A HYDROPHOBIC SOLVENT
PROCÉDÉ DE FABRICATION DISCONTINUE DE PARTICULES SUPERABSORBANTES PAR POLYMÉRISATION D'UNE SOLUTION AQUEUSE DE MONOMÈRE EN DISPERSION DANS UN SOLVANT HYDROPHOBE

(30) Priorität: 02.05.2017 EP 17169005
(43) Veröffentlichungstag der Anmeldung: 11.03.2020
(73) Patentinhaber: BASF SE, 67056 Ludwigshafen am Rhein (DE)
(72) Erfinder: VON DER HEYDT, Marc Andre, 67056 Ludwigshafen (DE); KRUEGER, Marco, 67056 Ludwigshafen (DE); STANITZEK, Uwe, 67056 Ludwigshafen (DE)
(74) Vertreter: BASF IP Association
(86) Internationale Anmeldenummer: PCT/EP2018/060545
(87) Internationale Veröffentlichungsnummer: WO 2018/202489

(56) Entgegenhaltungen:
- EP-A1- 0 742 231
- WO-A1-2008/068208

## Beschreibung

Die vorliegende Erfindung betrifft ein Verfahren zur diskontinuierlichen Herstellung von Superabsorberpartikeln durch Polymerisation einer in einem hydrophoben Lösungsmittel dispergierten wässrigen Monomerlösung, wobei die Reaktion in einem Rührbehälter durchgeführt wird, der Rührbehälter jeweils erwärmt oder gekühlt werden kann und das dem Rührbehälter zugeführte hydrophobe Lösungsmittel unmittelbar vor Eintritt in den Rührbehälter eine Temperatur von mindestens 45°C aufweist.

Die Herstellung von Superabsorberpartikeln wird in der Monographie " Modern Superabsorbent Polymer Technology" , F.L. Buchholz und A.T. Graham, Wiley-VCH, 1998, Seiten 69 bis 117, beschrieben.

Superabsorberpartikel werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der Superabsorberpartikel können über den Vernetzungsgrad eingestellt werden. Mit steigendem Vernetzungsgrad steigt die Gelfestigkeit und sinkt die Absorptionskapazität.

Zur Verbesserung der Anwendungseigenschaften, wie beispielsweise Flüssigkeitsweiterleitung im gequollenen Gelbett (SFC) in der Windel und Absorption unter Druck (AUL), werden Superabsorberpartikel im allgemeinen oberflächennachvernetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können.

JP 2012-7062 A2, US 5,807,916 A und WO 2008/084031 A1 offenbaren Verfahren zur Herstellung von Superabsorberpartikeln durch Polymerisation einer dispergierten wässrigen Monomerlösung.

US 2015/0080539 beschreibt ein diskontinuierliches Verfahren unter Verwendung eines speziellen Rührbehälters zur Verkürzung des Aufheizens bzw. Abkühlens.

Aufgabe der vorliegenden Erfindung war die Bereitstellung eines verbesserten Verfahrens zur diskontinuierlichen Herstellung von Superabsorbern durch Polymerisation einer in einem hydrophoben Lösungsmittel dispergierten wässrigen Monomerlösung, wobei insbesondere die Chargenzeiten verkürzt werden.

Gelöst wurde die Aufgabe durch ein Verfahren zur diskontinuierlichen Herstellung von Superabsorberpartikeln durch Polymerisation einer in einem hydrophoben Lösungsmittel dispergierten wässrigen Monomerlösung, wobei das hydrophobe Lösungsmittel bei 23°C eine Löslichkeit in Wasser zu weniger als 5 g/100 g aufweist und wobei die wässrige Monomerlösung a) mindestens ein ethylenisch ungesättigtes, säuregruppentragendes Monomer, das zumindest teilweise neutralisiert sein kann, b) mindestens einen Vernetzer und c) mindestens einen Initiator enthält, umfassend i) Vorlegen einer Mischung aus einem hydrophoben Lösungsmittel und einem Dispergierhilfsmittel in einem Rührbehälter, ii) optional Erwärmen der Mischung aus Schritt i), iii) optional Abkühlen Mischung aus Schritt i) oder Schritt ii), iv) Dosieren einer wässrigen Monomerlösung zu der Mischung aus Schritt i), ii) oder iii) unter Erhalt einer dispergierten Monomerlösung und v) Polymerisieren der dispergierten Monomerlösung unter Erhalt dispergierter Superabsorberpartikel,dadurch gekennzeichnet, dassdas hydrophobe Lösungsmittel allein oder zusammen mit dem Dispergierhilfsmittel in den Rührbehälter dosiert werden, das hydrophobe Lösungsmittel unmittelbar vor Eintritt in den Rührbehälter eine Temperatur von mindestens 45°C aufweist, die Reaktionsmischung nach der Polymerisation bei einer Temperatur von mindestens 45°C azeotrop entwässert und filtriert wird, das Filtrat eine Temperatur von mindestens 45°C aufweist und als hydrophobes Lösungsmittel in die Polymerisation rückgeführt wird.

Die Temperatur des hydrophoben Lösungsmittels beträgt vor Eintritt in den Rührbehälter vorzugsweise mindestens 60°C, besonders bevorzugt mindestens 70°C, ganz besonders bevorzugt mindestens 75°C.

Es ist auch möglich das hydrophobe Lösungsmittel im Rührbehälter weiter zu erwärmen, beispielsweise kann das hydrophobe Lösungsmittel vor dem Eintritt im Rührbehälter eine Temperatur von 60°C aufweisen und im Rührbehälter auf 90°C erwärmt werden.

Das Dispergierhilfsmittel wird zur Dispergierung der wässrigen Monomerlösung im hydrophoben Lösungsmittel bzw. der entstehenden Superabsorberpartikel eingesetzt.

Das Dispergierhilfsmittel kann bereits vor dem Eintritt des hydrophoben Lösungsmittels mit diesem gemischt oder getrennt vom hydrophoben Lösungsmittel in den Rührbehälter dosiert werden.

Zum Lösen des Dispergierhilfsmittels sind üblicherweise höhere Temperaturen notwendig. Wird das Dispergierhilfsmittel erst im Rührbehälter gelöst, kann es daher vorteilhaft sein das hydrophobe Lösungsmittel auf eine höhere Temperatur zu erwärmen. Nach dem Lösen des Dispergierhilfsmittels und vor der Dosierung der wässrigen Monomerlösung wird dann vorteilhaft gekühlt.

Als hydrophobe Lösungsmittel werden üblicherweise Kohlenwasserstoffe und Kohlenwasserstoffgemische eingesetzt.

Die Kohlenwasserstoffe oder Kohlenwasserstoffgemische sieden vorzugsweise im Bereich von 50 bis 150°C, besonders bevorzugt im Bereich von 60 bis 130°C, ganz besonders im Bereich von 70 bis 110°C.

In einer bevorzugten Ausführungsform der vorliegenden Erfindung wird das hydrophobe Lösungsmittel vor der Dosierung in den Rührbehälter mittels eines Wärmetauschers erwärmt. Als Wärmetauscher sind beispielsweise Rohrbündelwärmetauscher oder Plattenwärmetauscher geeignet.

Der Wärmetauscher weist üblicherweise eine größere effektive innere Oberfläche auf als der Rührbehälter. Die effektive innere Oberfläche ist dabei die für den Wärmeaustausch nutzbare innere Oberfläche. Der Quotient aus effektiver innerer Oberfläche des Wärmetauschers und effektiver innerer Oberfläche des Rührbehälters beträgt vorzugsweise mindestens 2, besonders bevorzugt mindestens 3, ganz besonders bevorzugt mindestens 4.

Der Wärmetauscher wird üblicherweise mit Dampf oder Warmwasser beheizt. Der verwendete Dampf weist einen Überdruck gegenüber dem Umgebungsdruck von vorzugsweise 0,5 bis 20 bar, besonders bevorzugt von 1 bis 10 bar, ganz besonders bevorzugt von 1,5 bis 6 bar, auf.

In einer bevorzugten Ausführungsform der vorliegenden Erfindung wird der Wärmetauscher so dimensioniert, dass die Dosierung des hydrophoben Lösungsmittels in den Rührbehälter nicht verzögert wird.

In einer weiteren bevorzugten Ausführungsform der vorliegenden Erfindung wird die Reaktionsmischung nach der Polymerisation bei einer Temperatur von mindestens 45°C, vorzugsweise mindestens 60°C, besonders bevorzugt mindestens 70°C, ganz besonders bevorzugt mindestens 75°C, azeotrop entwässert und anschließend werden die Superabsorberpartikel mittels Filtration abgetrennt.

Das bei der Filtration anfallende Filtrat weist eine Temperatur von mindestens 45°C, vorzugsweise mindestens 60°C, besonders bevorzugt mindestens 70°C, ganz besonders bevorzugt mindestens 75°C, auf und wird als hydrophobes Lösungsmittel in die Polymerisation rückgeführt.

Die vorliegende Erfindung ermöglicht eine Verkürzung der Chargenzeiten und damit auf einfache und kostengünstige Weise eine Kapazitätserhöhung bestehender Anlagen.

Im Folgenden wird die Herstellung der Superabsorberpartikel erläutert:
Die zur Herstellung der Superabsorberpartikel eingesetzte wässrige Monomerlösung enthält üblicherweise
a) mindestens ein ethylenisch ungesättigtes, säuregruppentragendes Monomer, das zumindest teilweise neutralisiert sein kann,
b) mindestens einen Vernetzer,
c) mindestens einen Initiator
d) optional ein oder mehrere mit den unter a) genannten Monomeren copolymerisierbare ethylenisch ungesättigte Monomere und
e) optional ein oder mehrere wasserlösliche Polymere.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, Maleinsäure und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) können teilweise neutralisiert sein. Die Neutralisation wird auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalze können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Die Monomere a) enthalten üblicherweise Polymerisationsinhibitoren, vorzugsweise Hydrochinonmonomethylether (MEHQ), als Lagerstabilisator.

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Wird die Polymerisation unter ausreichendem Rückfluss durchgeführt, so kann auf die Inertisierung verzichtet werden. Dabei wird der gelöste Sauerstoff zusammen mit dem verdampfenden Lösungsmittel aus dem Rührbehälter entfernt.

Zur Polymerisation wird die wässrige Monomerlösung in dem hydrophoben Lösungsmittel dispergiert.

Als hydrophobe Lösungsmittel sind alle dem Fachmann zum Einsatz bei der umgekehrten Suspensionspolymerisation bekannten Lösungsmittel einsetzbar. Bevorzugt werden aliphatische Kohlenwasserstoffe, wie n-Hexan, n-Heptan, n-Oktan, n-Nonan, n-Dekan, Cyclohexan oder Mischungen daraus, verwendet. Hydrophobe Lösungsmittel weisen bei 23°C eine Löslichkeit in Wasser zu weniger als 5 g/100 g, vorzugsweise weniger als 1 g/100 g, besonders bevorzugt weniger als 0,5 g/100 g, auf.

Das Verhältnis zwischen hydrophoben Lösungsmittel und wässriger Monomerlösung beträgt 0,5 bis 3, bevorzugt 0,7 bis 2,5 und ganz bevorzugt von 0,8 bis 2,2.

Der mittlere Durchmesser der wässrigen Monomerlösungstropfen in der Dispersion beträgt, wenn keine Agglomeration durchgeführt wird, vorzugsweise mindestens 100 µm, besonders bevorzugt von 100 bis 1000 µm, besonders bevorzugt von 150 bis 850 µm, ganz besonders bevorzugt von 300 bis 600 µm, wobei der Tropfendurchmesser durch Lichtstreuung bestimmt werden kann und den volumengemittelten mittleren Durchmesser bedeutet.

Der Durchmesser der wässrigen Monomerlösungstropfen kann über die eingetragene Rührenergie und durch geeignete Dispergierhilfsmittel eingestellt werden.

Geeignete Dispergierhilfsmittel sind beispielsweise anionische, kationische, nichtionische oder amphotere Tenside, oder natürliche, halbsynthetische oder synthetische Polymere.

Anionische Tenside sind beispielsweise Natriumpolyoxyethylendodecylethersulfat und Natriumdodecylethersulfat. Ein kationisches Tensid ist beispielsweise Trimethylstearylammoniumchlorid. Ein amphoteres Tensid ist beispielsweise Carboxymethyldimethylcetylammonium. Nichtionische Tenside sind beispielsweise Saccharosefettsäureester, wie Saccharosemonostearat und Saccharosedilaurat, Sorbitanester, wie Sorbitanmonostearat, Polyoxyalkylen-Verbindungen auf Basis von Sorbitanestern, wie Polyoxyethylensorbitanmonostearat.

Natürliche oder halbsynthetische Polymere sind beispielsweise Cellulosederivate, wie Celluloseether, beispielsweise Ethylcellulose, und Celluloseester, beispielsweise Celluloseacetate. Synthetische Polymere sind beispielsweise Polyvinylalkohole, Polyvinylalkohol-Derivate, Maleinsäure-Butadien-Copolymere und quaternäre Salze, wie Styroldimethylaminoethylmethactylat.

Das Dispergierhilfsmittel wird üblicherweise im hydrophoben Lösungsmittel gelöst oder dispergiert.

Das Dispergierhilfsmittel wird in Mengen zwischen 0.01 und 10 Gew.-%, bevorzugt zwischen 0,2 und 5 Gew.-%, besonders bevorzugt zwischen 0,5 und 2 Gew.-%, bezogen auf die wässrige Monomerlösung, eingesetzt.

Die Reaktion wird vorzugsweise unter vermindertem Druck durchgeführt, beispielsweise bei einem Druck von 800 mbar. Über den Druck kann der Siedepunkt der Reaktionsmischung auf die gewünschte Reaktionstemperatur eingestellt werden.

Nach beendeter Polymerisation können die erhaltenen, dispergierten Superabsorberpartikel durch Zusatz weiterer wässriger Monomerlösung und erneuter Polymerisation agglomeriert werden. Die wässrige Monomerlösung kann eine von der ersten wässrigen Monomerlösung verschiedene Zusammensetzung haben. Die Agglomeration kann auch mehrfach durchgeführt weden.

Anschließend werden die erhaltenen, dispergierten Superabsorberpartikel azeotrop entwässert und mittels Filtration vom hydrophoben Lösungsmittel abgetrennt.

In einer bevorzugten Ausführungsform der vorliegenden Erfindung wird die nach der azeotropen Entwässerung erhaltene Dispersion nicht bzw. nicht vollständig abgekühlt. Das noch warme Filtrat wird als hydrophobes Lösungsmittel in die Polymerisation rückgeführt.

Die Superabsorberpartikel können zur weiteren Verbesserung der Eigenschaften oberflächennachvernetzt werden. Geeignete Oberflächennachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide (beispielsweise Denacol® EX810), wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des Weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Oberflächennachvernetzer beschrieben.

Die Menge an Oberflächennachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

In einer bevorzugten Ausführungsform der vorliegenden Erfindung werden zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt.

Die Einsatzmenge an polyvalentem Kation beträgt beispielsweise 0,001 bis 0,5 Gew.-%, vorzugsweise 0,005 bis 0,2 Gew.-%, besonders bevorzugt 0,02 bis 0,1 Gew.-%. jeweils bezogen auf das Polymer.

Die Oberflächennachvernetzung kann auf zwei unterschiedlichen Wegen durchgeführt werden.

So ist es möglich die entwässerte Dispersion zu filtrieren, wahlweise zu trocknen und erst die so erhaltenen Superabsorberpartikel oberflächennachzuvernetzen (Oberflächennachvernetzung A). Die Oberflächennachvernetzung wird dabei üblicherweise so durchgeführt, dass eine Lösung des Oberflächennachvernetzers und wahlweise eine Lösung des polyvalenten Kations auf die Superabsorberpartikel aufgesprüht wird. Im Anschluss an das Aufsprühen wird thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, und besonders bevorzugt 130 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Es ist aber auch möglich die Oberflächennachvernetzer und wahlweise die polyvalenten Kationen der wahlweise entwässerten Dispersion zuzusetzen, vorzugsweise als wässrige Lösung (Oberflächennachvernetzung B). Anschließend wird thermisch oberflächennachvernetzt. Hierzu werden reaktive Oberflächennachvernetzer, wie Di- oder Polyepoxide, bevorzugt eingesetzt. Nach der thermischen Oberflächennachvernetzung wird wahlweise azeotrop entwässert, filtriert und getrocknet.

### Beispiele

Für die Berechnungen wurde das Verfahren aus Comparative Example 1 der US 2015/0080539 verwendet. Die effektive innere Oberfläche des Rührbehälters beträgt 31,3 m². Es wurde weiter angenommen, dass das n-Heptan während der Dosierung in den Rührbehälter mittels eines Rohrbündelwärmetauschers erwärmt wird. Der Rohrbündelwärmetauscher wird mittels Dampf (5 bar) beheizt. Die effektive innere Oberfläche des Rohrbündelwärmetausches wurde so gewählt, dass die Dosierung des n-Heptans in den Rührbehälter nicht verzögert wird. Mit diesen Daten wurden die Aufheizzeiten im ersten Heizschritt ("first heating step ") berechnet.

**Tab.: Einfluss der Vorwärmung auf die Aufheizzeit**

| Beispiel | Temperatur vor Eintritt in den Rührbehälter | Effektive innere Oberfläche des Rohrbündelwärmetauschers | Dauer der Erwärmung auf 90°C im Rührbehälter |
|---|---|---|---|
| 1*) | 25°C | - | 113 Minuten |
| 2 | 50°C | 62 m² | 73 Minuten |
| 3 | 55°C | 75 m² | 70 Minuten |
| 4 | 60°C | 87 m² | 65 Minuten |
| 5 | 65°C | 99 m² | 60 Minuten |
| 6 | 70°C | 112 m² | 53 Minuten |
| 7 | 75°C | 124 m² | 46 Minuten |
| 8 | 80°C | 137 m² | 38 Minuten |
| 9 | 85°C | 149 m² | 23 Minuten |
| 10 | 90°C | 161 m² | 0 Minuten |

| | | | |
|---|---|---|---|
| *) Vergleichsbeispiel | | | |

## Patentansprüche

1. Verfahren zur diskontinuierlichen Herstellung von Superabsorberpartikeln durch Polymerisation einer in einem hydrophoben Lösungsmittel dispergierten wässrigen Monomerlösung, wobei das hydrophobe Lösungsmittel bei 23°C eine Löslichkeit in Wasser zu weniger als 5 g/100 g aufweist und wobei die wässrige Monomerlösung a) mindestens ein ethylenisch ungesättigtes, säuregruppentragendes Monomer, das zumindest teilweise neutralisiert sein kann, b) mindestens einen Vernetzer und c) mindestens einen Initiator enthält, umfassend
i) Vorlegen einer Mischung aus einem hydrophoben Lösungsmittel und einem Dispergierhilfsmittel in einem Rührbehälter,
ii) optional Erwärmen der Mischung aus Schritt i),
iii) optional Abkühlen Mischung aus Schritt i) oder Schritt ii),
iv) Dosieren einer wässrigen Monomerlösung zu der Mischung aus Schritt i), ii) oder iii) unter Erhalt einer dispergierten Monomerlösung und
v) Polymerisieren der dispergierten Monomerlösung unter Erhalt dispergierter Superabsorberpartikel,
**dadurch gekennzeichnet, dass** das hydrophobe Lösungsmittel allein oder zusammen mit dem Dispergierhilfsmittel in den Rührbehälter dosiert werden, das hydrophobe Lösungsmittel unmittelbar vor Eintritt in den Rührbehälter eine Temperatur von mindestens 45°C aufweist, die Reaktionsmischung nach der Polymerisation bei einer Temperatur von mindestens 45°C azeotrop entwässert und filtriert wird, das Filtrat eine Temperatur von mindestens 45°C aufweist und als hydrophobes Lösungsmittel in die Polymerisation rückgeführt wird.

2. Verfahren gemäß Anspruch 1, **dadurch gekennzeichnet, dass** das hydrophobe Lösungsmittel unmittelbar vor Eintritt in den Rührbehälter eine Temperatur von mindestens 60°C aufweist.

3. Verfahren gemäß Anspruch 1 oder 2, **dadurch gekennzeichnet, dass** das hydrophobe Lösungsmittel unmittelbar vor Eintritt in den Rührbehälter eine Temperatur von mindestens 70°C aufweist.

4. Verfahren gemäß einem der Ansprüche 1 bis 3, **dadurch gekennzeichnet, dass** das hydrophobe Lösungsmittel ein Kohlenwasserstoff oder ein Kohlenwasserstoffgemisch ist.

5. Verfahren gemäß Anspruche 4, **dadurch gekennzeichnet, dass** der Kohlenwasserstoff oder das Kohlenwasserstoffgemisch im Bereich von 50 bis 150°C siedet.

6. Verfahren gemäß einem der Ansprüche 1 bis 5, **dadurch gekennzeichnet, dass** das hydrophobe Lösungsmittel vor der Dosierung in den Rührbehälter mittels eines Wärmetauschers erwärmt wird.

7. Verfahren gemäß Anspruch 6, **dadurch gekennzeichnet, dass** der Quotient aus effektiver innerer Oberfläche des Wärmetauschers und effektiver innerer Oberfläche des Rührbehälters mindestens 2 beträgt.

8. Verfahren gemäß Anspruch 6 oder 7, **dadurch gekennzeichnet, dass** der Wärmetauscher mit Dampf oder Warmwasser beheizt wird.

9. Verfahren gemäß Anspruche 8, **dadurch gekennzeichnet, dass** der Dampf einen Druck im Bereich von 0,5 bis 20 bar aufweist.

10. Verfahren gemäß Anspruche 8, **dadurch gekennzeichnet, dass** der Dampf einen Druck im Bereich von 1,5 bis 6 bar aufweist.

## Claims

1. A process for batchwise production of superabsorbent particles by polymerization of an aqueous monomer solution dispersed in a hydrophobic solvent, wherein the hydrophobic solvent has a solubility in water at 23°C of less than 5 g/100 g and wherein the aqueous monomer solution comprises a) at least one ethylenically unsaturated monomer which bears acid groups and may have been at least partly neutralized, b) at least one crosslinker and c) at least one initiator, comprising
i) initially charging a stirred vessel with a mixture of a hydrophobic solvent and a dispersing aid,
ii) optionally heating the mixture from step i),
iii) optionally cooling mixture from step i) or step ii),
iv) metering an aqueous monomer solution into the mixture from step i), ii) or iii) to obtain a dispersed monomer solution and
v) polymerizing the dispersed monomer solution to obtain dispersed superabsorbent particles,
wherein the hydrophobic solvent is metered into the stirred vessel alone or together with the dispersing aid and the hydrophobic solvent immediately prior to entry into the stirred vessel is at a temperature of at least 45°C, the reaction mixture after the polymerization is azeotropically dewatered and filtered at a temperature of at least 45°C, and the filtrate is at a temperature of at least 45°C and is recycled into the polymerization as hydrophobic solvent.

2. The process according to claim 1, wherein the hydrophobic solvent immediately prior to entry into the stirred vessel is at a temperature of at least 60°C.

3. The process according to claim 1 or 2, wherein the hydrophobic solvent immediately prior to entry into the stirred vessel is at a temperature of at least 70°C.

4. The process according to any of claims 1 to 3, wherein the hydrophobic solvent is a hydrocarbon or hydrocarbon mixture.

5. The process according to claim 4, wherein the hydrocarbon or hydrocarbon mixture boils within the range from 50 to 150°C.

6. The process according to any of claims 1 to 5, wherein the hydrophobic solvent is heated by means of a heat exchanger before being metered into the stirred vessel.

7. The process according to claim 6, wherein the quotient of effective internal surface area of the heat exchanger and effective internal surface area of the stirred vessel is at least 2.

8. The process according to claim 6 or 7, wherein the heat exchanger is heated with steam or hot water.

9. The process according to claim 8, wherein the steam is at a pressure in the range from 0.5 to 20 bar.

10. The process according to claim 8, wherein the steam is at a pressure in the range from 1.5 to 6 bar.

## Revendications

1. Procédé pour la préparation discontinue de particules de superabsorbant par polymérisation d'une solution aqueuse de monomères dispersée dans un solvant hydrophobe, le solvant hydrophobe présentant à 23 °C une solubilité dans l'eau inférieure à 5 g/100 g et la solution aqueuse de monomères contenant a) au moins un monomère éthyléniquement insaturé, portant un groupe acide qui peut être au moins partiellement neutralisé, b) au moins un agent de réticulation et c) au moins un initiateur, comprenant
i) le chargement d'un mélange d'un solvant hydrophobe et d'un auxiliaire de dispersion dans une cuve agitée,
ii) éventuellement le chauffage du mélange de l'étape i),
iii) éventuellement le refroidissement du mélange de l'étape i) ou de l'étape ii),
iv) l'ajout d'une solution aqueuse de monomères au mélange de l'étape i), ii) ou iii) avec obtention d'une solution de monomères dispersée et
v) la polymérisation de la solution de monomères dispersée avec obtention de particules de superabsorbant dispersées,
**caractérisé en ce que** le solvant hydrophobe est ajouté dans la cuve agitée seul ou ensemble avec l'auxiliaire de dispersion, le solvant hydrophobe présente, immédiatement avant l'entrée dans la cuve agitée, une température d'au moins 45 °C, le mélange de réaction est, après la polymérisation, déshydraté de manière azéotrope à une température d'au moins 45 °C et filtré, le filtrat présente une température d'au moins 45 °C et est renvoyé en tant que solvant hydrophobe dans la polymérisation.

2. Procédé selon la revendication 1, **caractérisé en ce que** le solvant hydrophobe présente, immédiatement avant l'entrée dans la cuve agitée, une température d'au moins 60 °C.

3. Procédé selon la revendication 1 ou 2, **caractérisé en ce que** le solvant hydrophobe présente, immédiatement avant l'entrée dans la cuve agitée, une température d'au moins 70 °C.

4. Procédé selon l'une quelconque des revendications 1 à 3, **caractérisé en ce que** le solvant hydrophobe est un hydrocarbure ou un mélange d'hydrocarbures.

5. Procédé selon la revendication 4, **caractérisé en ce que** l'hydrocarbure ou le mélange d'hydrocarbures bout dans la plage de 50 à 150 °C.

6. Procédé selon l'une quelconque des revendications 1 à 5, **caractérisé en ce que** le solvant hydrophobe est chauffé au moyen d'un échangeur de chaleur avant l'ajout dans la cuve agitée.

7. Procédé selon la revendication 6, **caractérisé en ce que** le quotient de la surface interne effective de l'échangeur de chaleur et de la surface interne effective de la cuve agitée est d'au moins 2.

8. Procédé selon la revendication 6 ou 7, **caractérisé en ce que** l'échangeur de chaleur est chauffé avec de la vapeur ou de l'eau chaude.

9. Procédé selon la revendication 8, **caractérisé en ce que** la vapeur présente une pression dans la plage de 0,5 à 20 bars.

10. Procédé selon la revendication 8, **caractérisé en ce que** la vapeur présente une pression dans la plage de 1,5 à 6 bars.
